# FASCICULE DE BREVET EUROPEEN

(11) **EP 3 693 949 B1**
(45) Date de publication et mention de la délivrance du brevet: **04.06.2025**
(21) Numéro de dépôt: 20155850.9
(22) Date de dépôt: 06.02.2020
(51) Int. Cl.: G09B 5/06, G09B 17/00

(54) **DISPOSITIF ET METHODE D'APPRENTISSAGE DE LECTURE**
VORRICHTUNG UND METHODE ZUM LESENLERNEN
DEVICE AND METHOD FOR LEARNING TO READ

(30) Priorité: 06.02.2019 FR 1901178
(43) Date de publication de la demande: 12.08.2020
(73) Titulaire: LILYLEARN, 14000 Caen (FR)
(72) Inventeur: VILLAIN, Valérie, 14000 CAEN (FR)
(74) Mandataire: IPAZ

(56) Documents cités:
- FR-A1- 2 499 267
- FR-A5- 2 045 222
- ANONYMOUS: "Jeu cubémot - FFV-Innovations", 15 June 2018 (2018-06-15), XP055610750, Retrieved from the Internet <URL:http://ffvinnovations.com/index.php/2018/06/15/jeu-apprentissage-syllabique/> [retrieved on 20190805]
- TSUDA MARIKO ET AL: "System Operation Improvement of P-CUBE2 for Visually Impaired People", 2018 WORLD AUTOMATION CONGRESS (WAC), TSI PRESS, 3 June 2018 (2018-06-03), pages 1 - 5, XP033382722, DOI: 10.23919/WAC.2018.8430431
- ANONYMOUS: "Lil' Speller Phonics Station User's Manual", 14 January 2014 (2014-01-14), pages 1 - 10, XP055826750, Retrieved from the Internet <URL:https://www.vtechkids.com/assets/data/products/{22C69859-CAA2-4AEE-8FD6-20050BF66C00}/manuals/155000LilSpellerPhonicsStationAW.pdf> [retrieved on 20210722]
- BSCKIDS: "Lil' Speller Phonics Station", YOUTUBE, 19 March 2017 (2017-03-19), pages 3 pp., XP054982080, Retrieved from the Internet <URL:https://www.youtube.com/watch?v=aSfZu575-8k> [retrieved on 20210722]
- ALISSA N ANTLE ET AL: "PhonoBlocks", TANGIBLE, EMBEDDED, AND EMBODIED INTERACTION, ACM, 2 PENN PLAZA, SUITE 701 NEW YORK NY 10121-0701 USA, 15 January 2015 (2015-01-15), pages 533 - 538, XP058065548, ISBN: 978-1-4503-3305-4, DOI: 10.1145/2677199.2687897

## Description

La présente invention se rapporte au domaine de l'apprentissage de la lecture, et plus particulièrement à l'apprentissage en toute autonomie sans l'usage de dispositifs électroniques.

Il existe beaucoup de dispositifs électroniques ou matériels éducatifs montrant des lettres, des mots. Le document "Jeu cubemot - FFV-Innovations", 15 juin 2018 (2018-06-15) en est un exemple.

Les enfants peuvent souvent les manipuler, les ordonner en copiant sur un modèle et accéder à leur sens par une image associée. Mais la présence d'un adulte est nécessaire pour apporter l'oral, pour associer une lettre au(x) son(s) qu'elle fait, et pour fusionner les sons, [I] suivi de [a] fait [la]. Les transcriptions phonétiques d'une lettre ou d'un mot ou d'une phrase, pour la plupart représentées par des lettres grecques ou latines ou des modifications de celles -ci, se notent entre crochets, selon la nomenclature de l'alphabet phonétique international. L'alphabet phonétique international est un alphabet utilisé pour la transcription phonétique des sons du langage parlé.

Il existe des applications éducatives pour l'apprentissage de la lecture, sans la présence nécessaire d'un adulte. Mais ces solutions nécessitent l'usage d'écrans tel que téléphone portable ou tablette. Les parents n'aiment pas que les enfants utilisent fréquemment les téléphones portables ou tablettes.

L'objet de l'invention est donc de surmonter les inconvénients décrits ci-dessus en fournissant un dispositif d'apprentissage de lecture en toute autonomie, sans l'usage de dispositifs tels que tablettes ou téléphones portables, et une méthode associée à ce dispositif.

L'objet de l'invention est réalisé par un dispositif d'apprentissage de lecture, qui peut comprendre un ensemble d'objets à identifier, chaque objet à identifier comprenant un moyen d'identification, un élément de support comprenant N positions, pour permettre un positionnement prédéterminé d'un objet à identifier à une position sur l'élément de support, un moyen d'analyse, et un moyen acoustique, pour oraliser un signal sonore, dans lequel chaque objet à identifier est distinct de l'élément de support, l'élément de support comprend en outre N moyens de reconnaissance configurés pour détecter la présence d'un objet à identifier positionné à une position de l'élément de support et pour l'identifier, et le moyen d'analyse est configuré pour analyser le signal de reconnaissance de l'élément de support, et pour associer un signal sonore à la séquence de n objets à identifier, avec 1≤n≤N, positionnés directement l'un à côté de l'autre sur l'élément de support en fonction de l'identité des n objets à identifier, de telle manière que le moyen acoustique oralise le signal sonore obtenu par le moyen d'analyse pour la séquence de n objets à identifier. Ainsi, le dispositif permet d'oraliser une séquence d'objets à identifier, à partir d'objets à identifier individuels, qui ne nécessite pas l'usage de tablettes ou téléphones portables. Si l'objet à identifier correspond à une lettre, le dispositif permet donc d'associer et d'oraliser à chaque lettre un son et à une séquence de lettres le son associé à la combinaison des lettres. La séquence de lettres peut définir un mot ou bien simplement être une séquence de lettres n'ayant aucun sens, n'existant dans aucun dictionnaire. Cela permet d'oraliser le mot et d'oraliser chaque étape de l'encodage ou écriture d'un mot et de comprendre le principe de fonctionnement phonétique du langage écrit de la langue utilisée, tout cela de manière autonome.

Selon une variante, le moyen d'analyse peut être configuré pour associer un deuxième signal sonore à une deuxième séquence de n' objets à identifier, avec 1≤n'≤N, séparée de la première séquence de n objets à identifier par au moins une position libre sur l'élément de support, de telle manière que le moyen acoustique peut oraliser de plus le deuxième signal sonore. Ainsi, le dispositif permet d'oraliser plusieurs séquences d'objets à identifier, à partir d'objets à identifier individuels, qui ne nécessite pas l'usage de tablettes ou téléphones portable. Lorsque chaque séquence correspond à un mot, le dispositif permet donc d'oraliser plusieurs mots ensemble. Cela permet par exemple d'enseigner l'usage d'articles définis ou indéfinis correspondant au deuxième mot présent sur le support, ou encore l'usage d'adjectif avec un mot, tel qu'un adjectif de couleur ou de forme.

Selon une variante de l'invention, les N moyens de reconnaissance de l'élément de support peuvent comprendre chacun un moyen de connexion électrique, en particulier des connecteurs, encore plus en particulier des connecteurs à ressort, pour pouvoir établir un contact électrique avec le moyen d'identification d'un objet à identifier quand l'objet est placé sur une des N positions de l'élément de support. Ces moyens de connexion électrique permettent de reconnaitre la présence de l'objet à identifier par contact électrique, mais aussi de maintenir l'objet à identifier en place grâce à l'effet ressort.

Selon une variante de l'invention, chaque objet à identifier peut comprendre un moyen de positionnement d'accouplement et chacune des N positions de l'élément de support peut comprendre un moyen de positionnement d'accouplement pour pouvoir réaliser une connexion mécanique par complémentarité de forme, en particulier par encliquetage. Ceci permet d'assurer un placement stable de chacun des objets à identifier placé sur le moyen de positionnement d'accouplement de chaque position de l'élément de support et permet d'indiquer le sens de positionnement de l'objet à identifier. Une connexion par encliquetage empêche que les objets déjà placés puissent tomber si le jeu est retourné par erreur.

Selon une variante de l'invention, le moyen d'identification de l'objet à identifier peut comprendre un circuit électronique passif, en particulier une résistance. Le moyen d'identification permet d'associer une identification à chaque objet à identifier sans besoin d'une alimentation en énergie de l'objet qui simplifie la conception de l'objet.

Selon une variante de l'invention, chaque objet à identifier peut représenter une lettre d'alphabet et le moyen d'analyse peut être configuré pour oraliser la lettre en fonction de sa prononciation dans la séquence. Ainsi, lorsqu'une séquence d'objets à identifier est placée sur le support, donc une séquence de lettres, le dispositif permet de visualiser et d'oraliser la prononciation du mot correspondant à la séquence des lettres. Lorsque plusieurs séquences d'objets à identifier sont placées sur le support, donc plusieurs mots, le dispositif permet de visualiser et d'oraliser la prononciation des mots correspondant aux séquences présentes, dans l'ordre où les séquences sont placées sur l'élément de support.

Selon une variante de l'invention, chaque objet à identifier peut comprendre plusieurs motifs, chaque motif étant différent et chaque motif étant représenté sur une face de l'objet à identifier. Ainsi, le nombre d'objets à identifier peut être réduit et le dispositif est donc plus simple et moins cher, comprenant moins d'objets. Ainsi, lorsque l'objet à identifier a pour motif une lettre d'alphabet, il n'est pas nécessaire d'avoir 25 cubes différents, chacun correspondant à une lettre de l'alphabet. Un objet en forme de cube peut comporter jusqu'à six motifs différents, par exemple six lettres.

Selon une variante de l'invention, le dispositif d'apprentissage de lecture peut comprendre en outre un deuxième ensemble d'objets représentant un mot et un deuxième moyen de support pour recevoir un objet du deuxième ensemble, le moyen d'analyse étant configuré pour comparer le mot d'un objet du deuxième ensemble placé sur le deuxième moyen de support avec la séquence d'objets à identifier placé sur l'élément de support et configuré pour émettre un signal sonore et/ou visuel en fonction du résultat de la comparaison. Le deuxième moyen de support et le deuxième objet permettent de vérifier et valider les objets à identifier déjà placés par l'usager ou à placer sur l'élément de support de manière indépendante, sans avoir besoin d'aide externe. Cela permet une auto-validation, auto- vérification et auto-identification.

L'objet de l'invention est aussi réalisé par un procédé d'apprentissage de la lecture utilisant le dispositif d'apprentissage de lecture décrit précédemment qui peut comprendre les étapes de a) placer un objet à identifier sur une position libre de la pluralité des N positions de l'élément de support, b) reconnaitre cet objet à identifier par le moyen de reconnaissance correspondant, c) analyser le signal de reconnaissance obtenu à l'étape b), pour associer le signal sonore à une séquence d'objets à identifier placés de manière directement l'un à côté de l'autre sur l'élément de support, en fonction de l'identité de chaque objet à identifier placé sur l'élément de support et sa place dans la séquence, et d) oraliser le signal sonore associé audits objets à identifier de la séquence de 1 à N objets à identifier obtenu lors de l'étape c). Cette méthode permet d'associer un son à un objet à identifier sans avoir besoin d'aide externe pour valider / confirmer l'association de son faite à l'objet à identifier. Cela permet donc une méthode d'autocorrection / validation / d'apprentissage. De plus, cette méthode permet d'associer un signal sonore à chaque objet à identifier seul ou en combinaison avec d'autres objets à identifier. Par exemple, si l'objet à identifier est une lettre, cette méthode permet d'associer un son à une lettre et d'associer le son d'un mot à une combinaison de lettres.

Selon une variante de l'invention, dans l'étape c), le signal sonore peut correspondre à la prononciation syllabique de la séquence des lettres formée par des objets à identifier placés de manière directement adjacente sur l'élément de support. Ainsi, il est possible d'oraliser des mots ou parties de mots, en combinant le signal sonore, le son ou phonème, de chaque lettre placée sur l'élément de support avec le son ou phonème de la lettre directement adjacente sur l'élément de support. Ainsi, à une lettre correspond un son ou phonème et à une combinaison de lettres correspond une fusion de sons ou phonèmes qui ne correspond pas à la juxtaposition des phonèmes correspondants à chaque lettre présente seule, mais donne un autre son correspondant à une chaine sonore.

Selon une variante de l'invention, lorsque plusieurs séquences d'objets sont placées sur l'élément de support, le signal sonore de l'étape c) de la méthode d'apprentissage de lecture peut correspondre à l'ensemble des signaux sonores de chaque séquence d'objets placées sur l'élément de support. Ainsi, lorsque chaque séquence correspond à un mot, le dispositif permet d'oraliser plusieurs mots ensemble. Cela permet par exemple d'enseigner l'usage d'articles définis ou indéfinis correspondant au deuxième mot présent sur le support, ou encore l'usage d'adjectif avec un mot, tel qu'un adjectif de couleur ou de forme.

Selon une variante de l'invention, la méthode d'apprentissage de lecture peut comprendre en outre une étape de vérification pour vérifier si la séquence d'objets à identifier placés sur l'élément de support correspond à un objet d'un deuxième ensemble d'objets à identifier placé sur le deuxième moyen de support. Cette étape de vérification peut être visuelle et/ou orale. Cette étape, lorsque réalisée au début du procédé, avant l'étape a), permet de diriger et d'aider l'usager à savoir quel objet à identifier à placer sur l'élément de support. La méthode est donc une méthode d'auto-apprentissage et d'auto-identification, sans besoin d'une aide externe. Cette étape, lorsque réalisée à la fin de la méthode, donc après l'étape d), permet de vérifier et valider les objets à identifier déjà placés par l'usager ou à placer sur l'élément de support de manière indépendante, sans avoir besoin d'aide externe. La méthode est donc une méthode d'auto-validation ou d'auto-vérification.

L'invention peut être comprise en se référant à la description suivante prise conjointement avec les Figures annexées, dans lesquelles des références numériques identifient les éléments de l'invention.
Figure 1a représentent une première réalisation du dispositif d'apprentissage de lecture selon l'invention et ses variantes.
Figure 1b représente une deuxième réalisation du dispositif d'apprentissage de lecture selon l'invention et ses variantes.
Figure 2a montre un diagramme schématique de la méthode d'apprentissage de lecture selon la première réalisation de l'invention et ses variantes.
Figure 2b montre un diagramme schématique de la méthode d'apprentissage de lecture selon la deuxième réalisation de l'invention et ses variantes.
Figure 3a montre une vue de face du positionnement d'une séquence d'objets à identifier sur le dispositif d'apprentissage de lecture selon la méthode d'apprentissage de lecture selon la première et deuxième réalisation de l'invention et ses variantes.
Figure 3b montre une vue de face du positionnement d'une séquence d'objets à identifier sur le dispositif d'apprentissage de lecture selon la méthode d'apprentissage de lecture selon la première et deuxième réalisation de l'invention et ses variantes.
Figure 3c montre une vue de face du positionnement d'une séquence d'objets à identifier sur le dispositif d'apprentissage de lecture selon la méthode d'apprentissage de lecture selon la première et deuxième réalisation de l'invention et ses variantes.
Figure 3d montre une vue de face du positionnement d'une séquence d'objets à identifier sur le dispositif d'apprentissage de lecture selon la méthode d'apprentissage de lecture selon la première et deuxième réalisation de l'invention et ses variantes.

L'invention va maintenant être décrite plus en détail en utilisant des modes de réalisation avantageux d'une manière exemplaire et en référence aux dessins. Les modes de réalisation décrits sont simplement des configurations possibles et il faut garder à l'esprit que les caractéristiques individuelles telles que décrites ci-dessus peuvent être fournies indépendamment les unes des autres ou peuvent être omises tout à fait lors de la mise en œuvre de la présente invention.

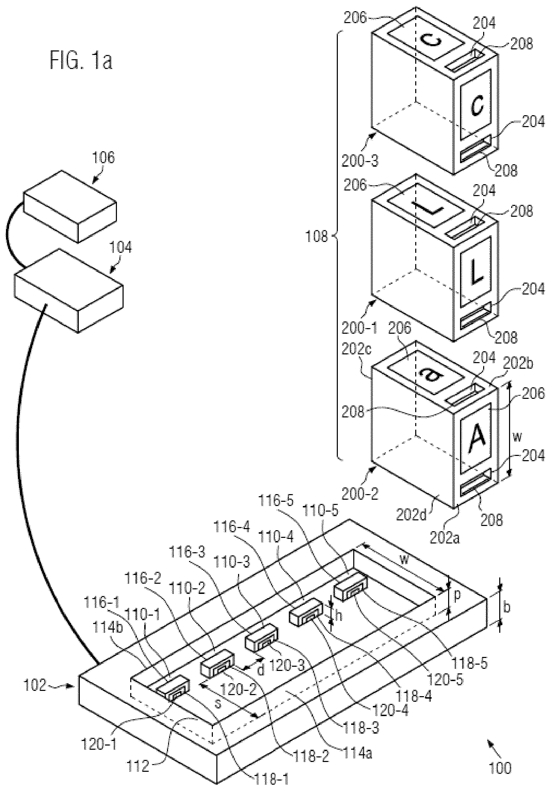

La Figure 1a représente une première réalisation d'un dispositif d'apprentissage de lecture selon l'invention. Le dispositif d'apprentissage de lecture 100 comprend un élément de support 102, un moyen d'analyse 104, un moyen acoustique 106 et un ensemble 108 d'objets à identifier 200-N.

Un objet à identifier 200-N du dispositif d'apprentissage de lecture 100 est représenté dans la Figure 1a en forme de cube, avec six faces 202a - 202f. Dans une variante de l'invention, l'objet à identifier 200-N peut avoir une autre forme que le cube. L'objet à identifier 200-N peut être un objet plat à presque 2 dimensions, comme un rectangle tel qu'une carte.

L'objet à identifier 200-N du dispositif d'apprentissage de lecture 1 peut être un objet traditionnel, par exemple un cube en bois, fait en matériaux éco-responsables et qui n'émet pas d'ondes électromagnétiques. De plus, c'est un objet passif, dans le sens ou l'objet n'a pas besoin d'une alimentation en énergie et l'objet ne réagit pas activement à une action de l'usager. L'usager doit bouger / positionner l'objet 200-N sur l'élément de support 102 du dispositif d'apprentissage 100 pour identifier l'objet 200-N.

Sur la Figure 1a, seulement les deux faces 202a et 202b du cube 200-2 comportent chacune un motif 206 et un moyen de positionnement d'accouplement 204. Dans une variante, plus ou moins de faces des faces 202a - 202f du cube 200 comportent chacune un motif 206 et un moyen de positionnement d'accouplement 204. Dans une autre variante, un seul moyen de positionnement d'accouplement 204 et/ou un seul motif 206 sont présents sur une face 202 du cube 200-2.

Le motif 206 des faces 202a-202f du cube 200-2 est un motif 206 en relief. Dans une variante, ce motif 206 peut aussi être évidé plutôt qu'en relief sur la face du cube 200-2. Sur la Figure 1a, le motif 206 est une lettre d'alphabet. Dans une variante, il peut aussi être un chiffre ou une combinaison de points en relief par exemple pour représenter une lettre ou un chiffre en braille. Le motif 206 de chaque face 202a - 202f du cube 200 est le même ou peut aussi être différent. Par exemple, comme illustré sur la Figure 1a, le motif 206 de la face 202a du cube 200-2 est une lettre en majuscule « A » et le motif 206 d'une autre face 202b du cube 200-2 est la même lettre en minuscule « a ».

Dans une variante, chaque objet à identifier 200-N comprend plusieurs motifs 206, chaque motif 206 étant différent et chaque motif 206 étant représenté sur une face différente 202a-202f de l'objet à identifier 200-N. Ainsi, le nombre d'objets à identifier 200-N peut être réduit et le dispositif est donc plus simple et moins cher, comprenant moins d'objets 200-N. Ainsi, lorsque l'objet à identifier a pour motif une lettre d'alphabet, il n'est pas nécessaire d'avoir 25 cubes différents, chacun correspondant à une lettre de l'alphabet. Un objet en forme de cube peut comporter jusqu'à six motifs différents, par exemple six lettres.

Le moyen de positionnement d'accouplement 204 de l'objet à identifier 200-N peut être un détrompeur, en particulier un détrompeur femelle 204. Un détrompeur "anti erreur" est un dispositif généralement mécanique permettant d'éviter les erreurs d'assemblage, de montage, de branchement. Sur la Figure 1a, le détrompeur femelle 204 est une cavité 204.

L'objet à identifier 200 comprend en outre un moyen d'identification 208. Le moyen d'identification 208 est placé dans le moyen de positionnement d'accouplement 204 de l'objet à identifier 200. Dans une variante, le moyen d'identification 208 est placé séparément du moyen de positionnement d'accouplement 204 sur le cube 200.

Le moyen d'identification 208 est en particulier un circuit électrique passif d'identification. Le circuit électrique passif d'identification 208 comporte une résistance électrique unique. Dans une variante, le circuit électrique passif d'identification 208 comporte plusieurs résistances, soit en série ou soit en parallèle. Chaque moyen de positionnement 204 de l'objet à identifier 200 comprend un moyen d'identification 208. Les moyens d'identification 208 sont associés aux motifs 206 représentés sur les faces 202a-202f de l'objet à identifier 200. Par exemple, le moyen d'identification 208 de l'objet 200-1 de la Figure 1a est associé à la lettre « L ». Que la lettre « L » soit minuscule ou majuscule ne fait pas de différence.

L'élément de support 102 comprend une pluralité de positions 110, en particulier N positions 110-N pour assurer un positionnement prédéterminé d'un objet à identifier 200-N sur l'élément de support 102. L'élément de support 102 du dispositif d'apprentissage de lecture 100 permet ainsi de positionner de 1 jusqu'à N objets à identifier 200 d'une manière linéaire.

L'élément de support 102 a une forme allongée et peut aussi être appelé une réglette de support de par sa forme et fonctionnalité. L'élément de support 102 comprend en son centre une partie évidée 112 dans laquelle se trouvent les N positions 110-N. La largeur w de la partie évidée 112 définit l'espace qui existe entre les deux murs longitudinaux 114a, 114b de la partie évidée 112. La partie évidée 112 permet ainsi aussi de maintenir les objets à identifier 200-N sur l'élément de support 102. Chaque position 110-N dans la partie évidée 112 est espacée de la position suivante 110-N par une distance d. Dans une variante de l'invention, la partie évidée 112 peut aussi être une partie élevée par rapport à la partie supérieure de l'élément de support 102.

Chaque position 110-N des N positions comprend un moyen de positionnement d'accouplement 116-N. Les moyens de positionnement d'accouplement 116-N peuvent être des détrompeurs, en particulier un détrompeur male. Dans la Figure 1a, le moyen de positionnement d'accouplement 116-N est en saillie verticale avec la partie évidée 112, ils correspondent à une protrusion verticale.

Dans une autre variante, les moyens de positionnement d'accouplement 116-N des positions 110-N sont posés sur la partie supérieure de l'élément de support 112 en saillie vers le haut et l'élément de support 112 ne comporte pas de partie évidée 112. Ainsi seuls les moyens de positionnement d'accouplement 116-N des positions 110-N assurent le positionnement des objets à identifier 200-N sur l'ensemble de support 102.

Les moyens de positionnement d'accouplement 116-N des positions 110-N permettent de positionner un ou plusieurs ensemble(s) 108 d'objets à identifier 200-N sur l'élément de support 102. Sur la Figure 1a, un ensemble 108 d'objets à identifier 200-N est présent et comprend trois objets à identifier 200-1, 200-2 et 200-3 et l'élément de support comprend cinq positions 110_1 - 110_5. Dans une variante, le dispositif d'apprentissage de lecture 100 peut comprendre autant d'objets à identifier 200-N que de positions 110-N de l'élément de support 102 mais aussi plus ou moins d'objets à identifier 200-N que de positions 110-N présentes sur l'élément de support 102.

Par exemple, lorsque l'objet à identifier 200-N comprend une lettre, une séquence 108 d'objets à identifier 200-N correspond à un mot et donc le dispositif d'apprentissage de lecture 100 permet d'identifier et d'apprendre un mot. La séquence 108 d'objets à identifier 200-N peut aussi ne pas correspondre à un mot mais simplement à une séquence de lettres dans le désordre, n'ayant aucun sens.

Plusieurs séquences 108 d'objets à identifier 200-N peuvent aussi être présentes sur l'élément de support 102. Chaque séquence 108 peut avoir le même nombre d'objets 200-N à identifier ou bien simplement un nombre différents d'objets à identifier 200-N. Chaque séquence 108 d'objets à identifier 200-N est séparée d'une autre séquence 108 d'objets à identifier 200-N par au moins une position 110-N libre de l'élément de support 102. Ainsi, le dispositif d'apprentissage de lecture 100 permet d'identifier et d'apprendre plusieurs mots, tel un article accompagné d'un nom par exemple, ou un nom accompagné d'un adjectif.

L'élément de support 102 comprend en outre N moyens de reconnaissance 118-N. Les moyens de reconnaissance 118-N de l'élément de support 102 comprennent chacun un moyen de connexion électrique 120, en particulier des connecteurs, encore plus en particulier des connecteurs à ressort, pour connecter avec le moyen d'identification 208 de l'objet à identifier 200-N.

Dans la Figure 1a, les moyens de reconnaissance 118-N sont placés à chaque moyen de positionnement d'accouplement 116-N des positions 110-N de l'élément de support 102. Ainsi, les connecteurs à ressort 120-N permettent un bon maintien de l'objet 200-N au moyen de positionnement 116-N des positions 110-N par effet ressort. De plus, les moyens de connexion 120-N de l'élément de support 102 sont configurés pour connecter avec l'objet à identifier 200-N par contact et ainsi détecter la présence d'un objet à identifier 200-N sur l'élément de support 102. Pour N moyens de positionnement d'accouplement 116-N, il y a N signaux de reconnaissance. Chaque moyen de positionnement d'accouplement 116-N comporte un amplificateur, pour éviter les problèmes de modification de tensions, due aux diverses résistances électriques présentes dans l'élément de support 102.

Dans une autre variante de l'invention, les moyens de reconnaissance 118-N peuvent être placés sur l'élément de support 102 séparément des positions 110-N. Les moyens de reconnaissance 118-N peuvent être situés à un autre endroit sur l'élément de support 102 que là où se trouvent les positions 110-N.

Un ensemble 108 d'objets à identifier 200-N est présent dans le dispositif d'apprentissage de lecture 100. Chaque objet 200-N de l'ensemble 108 d'objets est distinct de l'élément de support 102 du dispositif d'apprentissage de la lecture 100. L'objet à identifier 200-N ne fait pas partie intégrante de l'élément de support 102. L'objet à identifier 200-N doit être placé sur l'élément de support 102 pour pouvoir être identifié. Chaque objet à identifier 200-N a une forme identique. Comme illustré dans la Figure 1a, l'objet à identifier 200-N est représenté par un cube comportant six faces. La taille de l'objet à identifier 200-N est définie par la largeur w de la partie évidée 112 de l'élément de support 102, de telle manière que chaque objet à identifier 200-N, quand il est placé sur l'élément de support 102, peut rentrer dans la partie évidée 112. Ainsi, la partie évidée 112 permet aussi de maintenir les objets à identifier 200-N sur l'élément de support 102 en fournissant un maintien par les murs latéraux et longitudinaux 114a, 114b de la partie évidée 112. Dans la variante ou l'élément de support 102 ne comprend pas de partie évidée 112, les dimensions des objets à identifier 200-N ne sont pas délimitées et peuvent variées en fonction du besoin.

A partir de l'ensemble d'objets à identifier 108, une ou plusieurs séquences 108 d'objets à identifier 200-N peuvent être placées sur l'élément de support 102 du dispositif 100. Ainsi, lorsque chaque séquence correspond à un mot, le dispositif permet d'oraliser plusieurs mots ensemble. Cela permet par exemple d'enseigner l'usage d'article définis ou indéfinis correspondant au deuxième mot présent sur le support, ou encore l'usage d'adjectif avec un mot, tel qu'un adjectif de couleur ou de forme. Chaque séquence 108 peut avoir le même nombre d'objets 200-N à identifier ou bien simplement un nombre différents d'objets à identifier 200-N.

Les moyens de positionnement d'accouplement 204 du cube 200-N permettent au cube 200-N d'être positionné à une position 110-N de l'élément de support 102, c'est-à-dire sur un détrompeur male, ainsi la position du cube 200-N est fixe et prédéterminée à chaque position 110-N, sur l'élément de support 102. La connexion mécanique ainsi réalisée entre l'objet 200-N et la position 110-N de l'élément de support 102 est faite par complémentarité de forme, en particulier par encliquetage. De plus, le fait que le détrompeur male 116 de l'élément de support 102 et le détrompeur femelle 204 de l'objet à identifier 200-N s'emboitent parfaitement permet de fournir un bon positionnement fixe pour assurer un bon maintien de l'objet à identifier 200-N sur l'élément de support 102. Par exemple, le détrompeur male 116 peut être une protrusion, une saillie verticale et le détrompeur femelle 204 peut être une cavité, comme illustré dans la Figure 1a. De manière générale, le positionnement d'un objet 200-N par rapport au support 102 peut être assuré par une connexion par ajustement de forme ou par encliquetage.

Dans une variante, le détrompeur 204 de l'objet à identifier 200-N peut être un détrompeur male et le détrompeur 116 de l'élément de support 102 un détrompeur femelle.

L'élément de support 102 est connecté à un moyen d'analyse 104 qui est configuré pour recevoir le signal de reconnaissance d'un objet à identifier 200-N des moyens de reconnaissance 118_N de l'élément de support 102. Le moyen d'analyse 104 est aussi configuré pour analyser le signal de reconnaissance d'un objet à identifier 200-N reçu et pour associer un signal sonore à la séquence de n objets positionnés directement l'un à côté de l'autre sur l'élément de support 102, avec 1≤n≤N. La connexion entre l'élément de support 102 et le moyen d'analyse 104 est faite par 2ADCs de 8 canaux chacun, contrôlés par 12C et des signaux logiques (MCP3208). Dans une variante, 2 ADCs de 4 canaux, contrôlés par 12C et une adresse ajustable par hardware (TLA2024) peuvent être utilisés. Dans une autre variante, la connexion peut aussi être faite un utilisant un bus 12C et un signal d'interruption.

Le moyen d'analyse 104 permet de savoir si un objet à identifier 200-N est placé sur l'élément de support 102, à quel moyen de positionnement d'accouplement 116-N d'une position 110-N et quel objet à identifier 200-N est placé sur l'élément de support 102 audit moyen de positionnement d'accouplement 116-N de ladite position 110-N et de pouvoir associer un signal sonore à cet objet à identifier 200-N. Pour cela, un logiciel peut être utilisé comportant un système Linux de gestion du fonctionnement. Chaque signal de reconnaissance d'un objet à identifier 200-N obtenu à la position 110-N est analysé directement et individuellement par le moyen d'analyse 104, donc par le système Linux, pour permettre d'associer un signal sonore à l'objet à identifier 200-N placé sur ladite position 110-N. Pour N objets à identifier positionnés sur l'élément de support 102, le moyen d'analyse 104 reçoit N signaux de reconnaissance.

Dans une variante, le moyen d'analyse 104 permet aussi de savoir si un objet à identifier 200-N a été enlevé de l'élément de support 102 et quel moyen de positionnement d'accouplement 116-N d'une position 110-N est devenue libre. Le signal de reconnaissance peut alors détecter la présence et/ou l'absence d'un objet à identifier 200-N sur l'élément de support 102. Le moyen d'analyse 104 reçoit le signal de reconnaissance des moyens de reconnaissance 116_N de l'élément de support 102 pour détecter la présence et/ou l'absence d'un objet à identifier 200-N sur l'élément de support 102 et l'identifier.

Dans une variante de l'invention, le moyen d'analyse 104 peut recevoir un seul signal de reconnaissance indiquant un changement d'état des signaux de reconnaissance des moyens de connexion 120_N de l'élément de support 102. Dans ce cas, l'unique signal de reconnaissance correspond à une agrégation des signaux de reconnaissance d'un objet à identifier 200-N des moyens de reconnaissance 118_N. La lecture et l'analyse de l'état des signaux de reconnaissance est faite par un registre accessible en 12C (PCF8574).

Lorsqu'une séquence 108 de n objets à identifier 200-N est placée sur l'élément de support 102 et les objets à identifier 200-N représentent une lettre, le moyen d'analyse 104 est configuré pour oraliser la lettre en fonction de sa prononciation dans la séquence 108.

Le moyen d'analyse 104 comporte en outre un moyen acoustique 106 pour oraliser le signal sonore obtenu par le moyen d'analyse 104. Le moyen acoustique 106 du moyen d'analyse 104 peut être un haut-parleur ou plusieurs haut-parleurs directionnels ou non directionnels, placé dans le moyen d'analyse 104 ou placé à l'extérieur du moyen d'analyse 104, séparément, mais connecté au moyen d'analyse 104 comme illustré sur la Figure 1a. Le moyen acoustique 106 permet à l'usager d'associer un son unique à un objet à identifier 200-N et permet ainsi un auto-apprentissage, sans avoir besoin d'une aide externe qui oralise le son de l'objet à identifier. L'usage de haut-parleurs directionnels comme moyen acoustique 106 permet de ne pas déranger les autres personnes environnantes et d'éviter l'utilisation d'un casque. Par ailleurs, l'utilisation de haut-parleurs permet à l'usager de garder contact avec son environnement ce qui s'y passe mais aussi ce qu'il pourrait faire qui dérangerait les autres. L'usage de haut-parleurs non directionnels comme moyen acoustique 106 permet d'utiliser le dispositif en groupe, afin d'en démontrer l'usage au groupe par exemple.

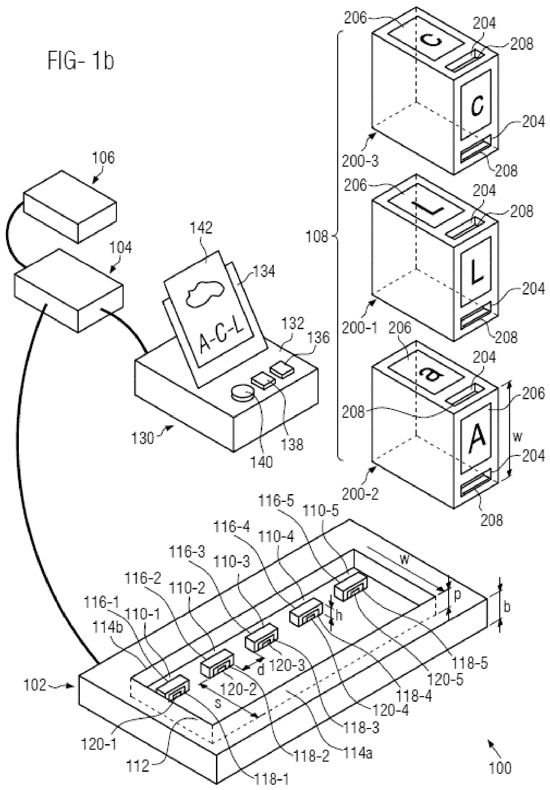

Dans une deuxième réalisation de l'invention, comme illustré sur la Figure 1b, le dispositif d'apprentissage de lecture 100 illustré en Figure 1a comprend en outre un deuxième moyen de support 130 connecté à l'élément de support 102 et / ou au moyen d'analyse 104. La connexion entre le deuxième moyen de support 130 avec l'élément de support 102 et / ou le moyen d'analyse 104 peut être faite avec un câble ou bien aussi sans câble. Le deuxième moyen de support 130 peut aussi contenir le moyen d'analyse 104. Toutes les caractéristiques avec les mêmes numéros de référence que sur la Figure 1a ne sont pas décrites à nouveau en détail, mais il est fait référence à leur description ci-dessus.

Ce deuxième moyen de support 130 peut être un moyen de support visuel et/ou acoustique 130. Le deuxième moyen de support 130 peut être un boîtier 132 comportant un support 134 et plusieurs boutons de fonctionnement 136 - 140, avec par exemple un bouton de relecture 136. Ce deuxième moyen de support comprend en outre un deuxième ensemble d'objets 142, en particulier comme objet une carte électronique 142. Dans une variante, un autre type de carte peut être utilisée comme objet 142 du deuxième ensemble d'objets 142 avec le deuxième moyen de support 130. Le deuxième ensemble d'objets 142 peut illustrer un ensemble de lettres, ordonnées ou désordonnées et/ou un dessin accompagnant et représentant les associations de lettres. Sur la Figure 1b, la carte 142 illustre par exemple un lac ainsi que les lettres « A », « C » et « L », en désordre. Le bouton de fonctionnement 138 permet de mettre en marche le deuxième moyen de support 130. Le deuxième moyen de support 130 permet de montrer, grâce au deuxième objet 142 du deuxième ensemble d'objets, les objets à identifier 200-N en désordre de la séquence 108 à placer sur l'élément de support 102 correspondant au deuxième objet 142. Le deuxième moyen de support 130 peut donc permettre une correction autodidacte par l'usager. Le bouton de relecture 136 du deuxième moyen de support 130 permet de relire et donc de réentendre le son associé aux objets 200-N déjà placés sur l'élément de support, à volonté. Dans une variante, le deuxième objet 142 montre dans l'ordre les objets à identifier 200-N de la séquence 108 à placer sur l'élément de support 102. Ainsi le mot à écrire correspondant à la séquence 108 est déjà visible sur le deuxième objet 142. Dans une autre variante, le deuxième objet 142 montre plusieurs mots, séparés par un espace, par exemple «LE» «LAC». Dans une variante de l'invention, les deuxièmes objets 142 positionnés sur le deuxième moyen de support 130 sont des cartes muettes, en particulier des cartes de dictées muettes, dans le sens ou leur utilisation avec le deuxième moyen de support 130 donne seulement un support visuel et non pas auditif, sans faire le son associé à la séquence de lettres.

Dans une autre variante de l'invention, un écran à encre électrique (e-ink) peut être utilisé pour afficher une image, gérée par le système de gestion de fonctionnement du moyen d'analyse 104. Cet écran permet de faire une détection automatique d'erreur en comparant la séquence 108 d'objets à identifier 200-N utilisés par l'usager et la séquence d'objets à identifier 200-N attendue, correspondant à l'image 142 affichée par le deuxième moyen de support 130. Ainsi, l'usager peut vérifier et valider les objets à identifier 200-N déjà placés ou à placer sur l'élément de support 102 de manière indépendante, sans avoir besoin d'aide externe, ce qui correspond à une auto-validation/vérification.

Le dispositif d'apprentissage de lecture de l'invention est applicable dans beaucoup de domaines. En effet les parents eux-mêmes mais aussi les écoles maternelles et élémentaires, les réseaux d'accompagnement des enseignants (Canopé en France), les écoles alternatives (Montessori, Freinet, Steiner, Decroly, écoles d'inspiration écologique...), pour les centres d'adaptation scolaire et scolarisation des élèves en situation de handicap (ASH), les centres de garde périscolaire, médiathèques, orthophonistes et autres peuvent utiliser un tel dispositif.

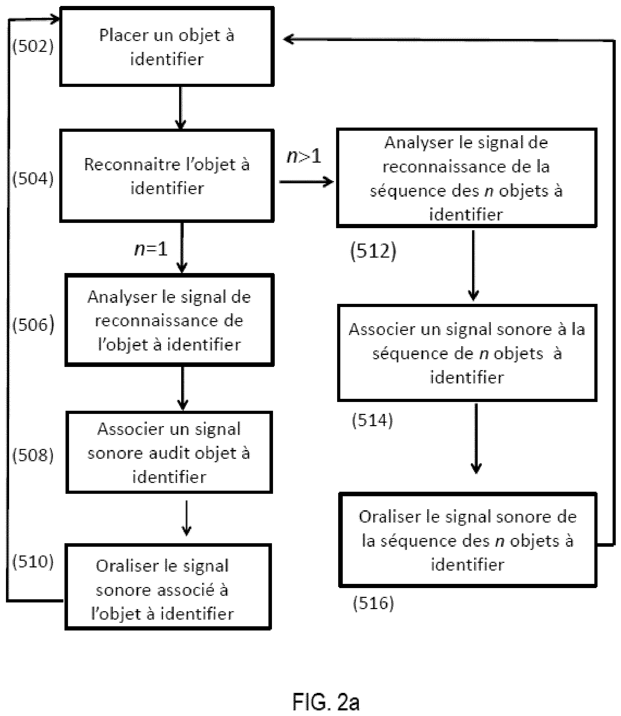

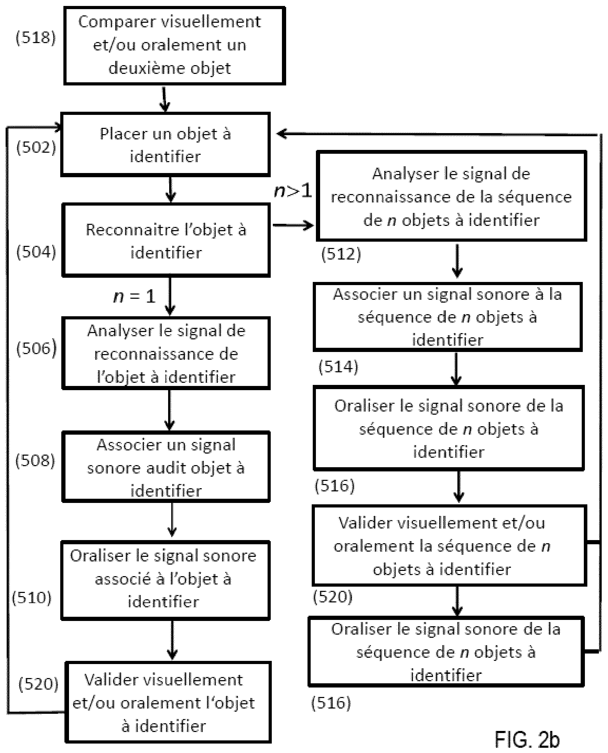

Les Figures 2a et 2b montrent un diagramme schématique d'une méthode d'apprentissage de lecture selon l'invention et ses variantes.

La méthode d'apprentissage de lecture selon l'invention utilisant un dispositif d'apprentissage de lecture comme décrit auparavant, comprend les étapes de a) placer un objet à identifier sur une position libre de la pluralité des N positions de l'élément de support, b) reconnaitre cet objet à identifier par le moyen de reconnaissance correspondant, c) analyser le signal de reconnaissance obtenu à l'étape b) pour associer un signal sonore à une séquence d'objets à identifier placés de manière directement l'un à côté de l'autre sur l'élément de support, en fonction de l'identité de chaque objet et sa place dans la séquence, et d) oraliser le signal sonore associé audits objets à identifier de la séquence de 1 à N objets, obtenu lors de l'étape c).

L'étape 502 de placer un objet à identifier d'une séquence de n objets, avec 1≤n≤N, consiste à placer de 1 à N objets à identifier sur la pluralité des N positions de l'élément de support d'un dispositif d'apprentissage de lecture. Chaque objet à identifier est positionné sur une position libre de l'élément de support du dispositif d'apprentissage de lecture, en particulier sur le moyen de positionnement d'accouplement de ladite position, directement l'un à côté de l'autre sur l'élément de support. Chaque objet à identifier comprend aussi un moyen de positionnement d'accouplement de telle manière que le moyen de positionnement d'accouplement de l'objet à identifier est placé sur un moyen de positionnement d'accouplement d'une position de l'élément de support.

Dans une variante, chaque objet à identifier est positionné sur une position libre de l'élément de support du dispositif d'apprentissage de lecture, mais pas directement l'un à côté de l'autre sur l'élément de support. Dans ce cas, au moins une position libre de l'élément de support est située entre deux objets à identifier. Par exemple, lorsque plusieurs séquences sont présentes sur l'élément de support, elles doivent être séparées par au moins une position libre pour pouvoir être reconnue de manière séparée comme des séquences différentes, et donc des mots différents, et non pas comme une unique séquence d'objets à identifier.

Cette étape 502 permet de placer chaque objet à identifier des n objets à identifier d'une manière fixe sur le moyen de positionnement d'accouplement d'une position libre de l'élément de support et à une place prédéterminée, ainsi que dans le bon sens de positionnement. Le moyen de positionnement d'accouplement de la position de l'élément de support peut être un détrompeur male et le moyen de positionnement d'accouplement de l'objet à identifier peut être un détrompeur femelle. Par exemple, une protrusion comme détrompeur male et une cavité comme détrompeur femelle. Ainsi, l'emboitage de la protrusion dans la cavité permet un positionnement fixe de l'objet à identifier sur l'élément de support.

L'étape 502 permet de positionner chaque objet à identifier d'une séquence sur l'élément de support à n'importe quelle position libre de la pluralité des N positions de l'élément de support, mais toujours directement l'un à côté de l'autre sur l'élément de support, pour la même séquence d'objets objet à identifier. Lorsque plusieurs séquence d'objets à identifier sont placées sur l'élément de support, chaque séquence d'objets à identifier est séparée de l'autre séquence par au moins une position libre sur l'élément de support. Dans ce cas, le dernier objet à identifier de la première séquence d'objets à identifier n'est pas positionné directement à côté du premier objet à identifier de la deuxième séquence d'objet à identifier.

Lorsqu'un objet à identifier est positionné sur un moyen de positionnement d'accouplement d'une position de l'élément de support lors de l'étape 502, l'étape 504 de reconnaitre cet objet est ensuite réalisée. L'étape 504 permet de reconnaitre chaque objet à identifier des n objets à identifier, pour 1≤n≤N.

Lorsque l'objet à identifier est positionné sur le moyen de positionnement d'accouplement d'une position, le moyen de reconnaissance du moyen de positionnement d'accouplement de ladite position détecte la présence dudit objet à identifier sur ce moyen de positionnement d'accouplement de l'élément de support et l'identifie. Pour N moyens de positionnement de l'élément de support, il y a N signaux de reconnaissance. De plus, les connecteurs à ressort permettent un bon maintien de l'objet audit moyen de positionnement d'accouplement de ladite position par effet ressort. Les moyens de connexion de l'élément de support sont configurés pour connecter avec l'objet à identifier par contact et ainsi détecter la présence d'un objet à identifier sur l'élément de support et identifier cet objet. En effet, lorsque l'objet à identifier est positionné sur un moyen de positionnement d'accouplement d'une position, le moyen de connexion détecte le moyen d'identification de l'objet à identifier positionné audit moyen de positionnement d'accouplement de ladite position de l'élément de support. En effet, chaque objet à identifier dispose d'un moyen d'identification, placé dans le moyen de positionnement d'accouplement. Le moyen d'identification de l'objet à identifier permet d'identifier quel objet à identifier est positionné sur l'élément de support car il correspond à un moyen d'identification spécifique et unique à chaque objet à identifier. Le moyen d'identification est un moyen d'identification passif et par exemple, il peut être une résistance électrique unique, impliquant une tension aux bornes de contact unique lorsque l'objet à identifier est placé sur l'élément de support à un moyen de positionnement d'accouplement d'une position. Ainsi, chaque moyen de connexion de l'élément de support détecte la présence et/ou l'absence d'objet à identifier sur les positions de l'élément de support, par une mesure de la tension aux bornes des contacts de chaque moyen de positionnement d'accouplement d'une position de l'élément de support lorsqu'un objet à identifier y est positionné. De plus, grâce à la présence du moyen d'identification, en particulier de la résistance électrique unique, le signal de reconnaissance comporte aussi l'identification de l'objet à identifier. Ainsi le signal de reconnaissance comprend l'information de savoir si n objets à identifier sont positionnés sur l'élément de support, où sont positionnés les n objets à identifier, quel objet à identifier est positionné sur quelle position de l'élément de support pour savoir quelle est la séquence des n objets à identifier. De plus, le signal de reconnaissance comprend aussi l'information de savoir si un objet à identifier a été enlevé de l'élément de support, où été positionné cet objet à identifier, et quels objets à identifier sont toujours positionnés sur quelle position de l'élément de support pour savoir quelle est maintenant la nouvelle séquence des n-1 objets à identifier.

Dans une variante de l'invention, les moyens de connexion électrique peuvent être de type radio-étiquette, appelé aussi RFID et ainsi l'étape 504 de reconnaissance peut aussi se faire par RFID.

L'élément de support est connecté à un moyen d'analyse. La connexion entre l'élément de support et le moyen d'analyse est faite par 2ADCs de 8 canaux chacun, contrôlé par 12C et des signaux logiques (MCP3208). Dans une variante, 2 ADCs de 4 canaux, contrôlé par 12C et une adresse ajustable par hardware (TLA2024) peuvent être utilisés. Dans une autre variante, la connexion peut aussi être faite un utilisant un bus 12C et un signal d'interruption.

Le moyen d'analyse reçoit les signaux de reconnaissance de l'élément de support et donc reçoit N signaux de reconnaissance d'objet à identifier si l'élément de support comporte N positions, et donc N moyens de reconnaissance.

Le moyen d'analyse réalise alors l'étape d'analyser les signaux de reconnaissance de l'objet à identifier reçu de l'élément de support, qui correspond à l'étape 506 si n = 1 ou à l'étape 512 si n est supérieur à 1. Chaque signal de reconnaissance est analysé directement et individuellement par un système de gestion de fonctionnement. Le système de gestion de fonctionnement est un system Linux, mais cela peut aussi être un autre type de système adapté pour la gestion de fonctionnement. Le moyen d'analyse permet d'associer un signal sonore à chaque objet à identifier grâce à l'information d'identification présente dans le signal de reconnaissance de l'étape 504.

Lorsque n=1, le signal sonore associé à l'objet à identifier positionné sur l'élément de support correspond à la lettre associée à l'objet à identifier. Par exemple, pour l'objet d'identification 200-1 de la Figure 1a, le signal sonore associé à l'objet à identifier 200-1 est associé au motif de l'objet à identifier 200-1 et correspond au son de la lettre « L ». Donc le signal sonore est le son [l]. Si le motif représente un chiffre, alors le signal sonore sera le son du chiffre. Selon l'alphabet phonétique international (version 2005), le son de la lettre « E » est représenté par la lettre grecque CHUA, correspondant à la lettre e inversée, entre crochets, i.e. [ 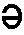 ].

Lorsque n est supérieur à 1, le signal sonore associé aux n objets à identifier positionnés sur l'élément de support correspond à la prononciation des lettres dans la séquence des n objets. Le moyen acoustique oralise le signal sonore correspondant à la combinaison des n objets à identifier lors de l'étape. Le moyen acoustique oralise la lettre en fonction de sa prononciation dans la séquence. Par exemple, si la séquence d'objets à identifier correspond à la séquence dans laquelle le premier objet à identifier a pour motif le « L » et le deuxième objet à identifier a pour motif le « A », le signal associé à la combinaison des deux objets à identifier, donc aux lettres « L » et « A » sera LA, en phonétique [la], et non pas le son L, en phonétique [l], suivi du son A, en phonétique [a].

Si plusieurs séquences d'objets sont présentes sur l'élément de support, chaque séquence étant séparée de la suivante par au moins une position libre de l'élément de support, le signal sonore associé aux objets à identifier positionnés sur l'élément de support correspond au signal sonore associé aux objets de chaque séquence, donc à la prononciation des lettres dans chaque séquence d'objets. Par exemple, si les séquences d'objets à identifier correspondent à la première séquence dans laquelle les objets à identifier ont pour motif le L et le E et la deuxième séquence dans laquelle les objets à identifier ont pour motif le « L », le « A » et le « C », le signal associé à la combinaison des deux séquences d'objets à identifier sera les sons LE, en phonétique [le], et LAC, en phonétique [lak], et non pas le son LELAC, en phonétique [lelak].

Si plusieurs séquences d'objets sont présentes sur l'élément de support mais chaque séquence n'est pas séparée de la suivante par une position libre de l'élément de support, alors le signal sonore associé aux objets à identifier positionnés sur l'élément de support correspond au signal sonore associé à tous les objets présents sur l'élément de support, comme s'ils appartenaient tous à une seule séquence. Par exemple, si les séquences d'objets à identifier correspondent à la première séquence dans laquelle les objets à identifier ont pour motif le « L » et le « E » et la deuxième séquence dans laquelle les objets à identifier ont pour motif le « L », le « A » et le « C », mais les objets à identifier de la première séquence et deuxième séquence sont placés directement les uns à côté des autres sur l'élément de support, le signal associé à la combinaison des deux séquences d'objets à identifier sera LELAC.

L'étape 512 d'associer un signal sonore à un objet à identifier prend en compte la présence / absence d'un objet à identifier directement à coté dudit objet à identifier pour associer un signal sonore correspondant à la combinaison des objets à identifier présents sur l'élément de support. Ainsi, à la deuxième itération, le signal sonore associé à l'objet à identifier de la deuxième itération ne correspond pas au signal sonore associé audit objet à identifier s'il était seul présent sur l'élément de support, mais correspond au signal sonore associé à la combinaison de l'objet à identifier de la première itération et de l'objet à identifier de la deuxième itération.

Par contre, si les deux objets à identifier ne sont pas directement placés côte à côte sur l'élément de support, mais par exemple au moins une position libre est présente entre les deux objets à identifier, à la deuxième itération, le signal sonore associé à l'objet à identifier de la deuxième itération correspond au signal sonore associé audit objet à identifier comme s'il était seul présent sur l'élément de support. Ainsi le signal sonore de l'étape 512 sera dans ce cas le signal sonore associé au premier objet à identifier de la première itération et le signal sonore associé de l'objet à identifier de la deuxième itération, oralisés de manière séparée.

Dans une variante, lors des itérations 2 à N, avant d'avoir de nouveau une étape 502 de placer un objet à identifier, une étape d'enlever un objet à identifier déjà posé de l'élément de support est réalisée. L'étape 504 permet de reconnaitre chaque objet à identifier des n objets à identifier présents sur l'élément de support et le signal de reconnaissance comprend aussi l'information de savoir quel objet à identifier a été enlevé de l'élément de support et où était positionné cet objet à identifier, et quels objets à identifier sont toujours positionnés sur quelle position de l'élément de support pour savoir quelle est maintenant la nouvelle séquence des n-1 objets à identifier. Alors, l'étape 512 d'associer un signal sonore à un objet à identifier prend en compte l'absence dudit objet à identifier pour associer un signal sonore correspondant à la nouvelle séquence des objets à identifier présents sur l'élément de support.

Selon une variante de l'invention, les signaux de reconnaissance peuvent être combinés en un seul signal indiquant un changement d'état de l'élément de support et la lecture des signaux de reconnaissance peut être faite par un registre accessible en 12C (PCF8574).

L'étape d'oraliser le signal sonore associé à l'objet à identifier obtenu lors de l'étape précédente d'analyse des signaux de reconnaissance est réalisé par un moyen acoustique. Le moyen acoustique peut être un haut-parleur ou plusieurs haut-parleurs directionnels ou non directionnels placé(s) dans le moyen d'analyse ou placé(s) à l'extérieur du moyen d'analyse, séparément, mais connecté(s) au moyen d'analyse. Le moyen acoustique permet à l'usager d'associer un son unique à un objet à identifier et permet ainsi un auto-apprentissage, sans avoir besoin d'une aide externe qui oralise le son de l'objet à identifier. L'usage de haut-parleurs directionnels comme moyen acoustique permet de ne pas déranger les autres personnes environnantes et d'éviter l'utilisation d'un casque. Par ailleurs l'utilisation de haut-parleurs permet à l'usager de garder contact avec son environnement ce qui s'y passe mais aussi ce qu'il pourrait faire qui dérangerait les autres.

Lorsque n = 1, cette étape d'oraliser le signal sonore associé à l'objet à identifier correspond à l'étape 510 et est basée sur le signal sonore obtenu lors de l'étape précédente 508.

Lorsque n est supérieur à 1, l'étape 516 oralise le signal sonore associé à la séquence d'objets à identifier obtenu à l'étape 514.

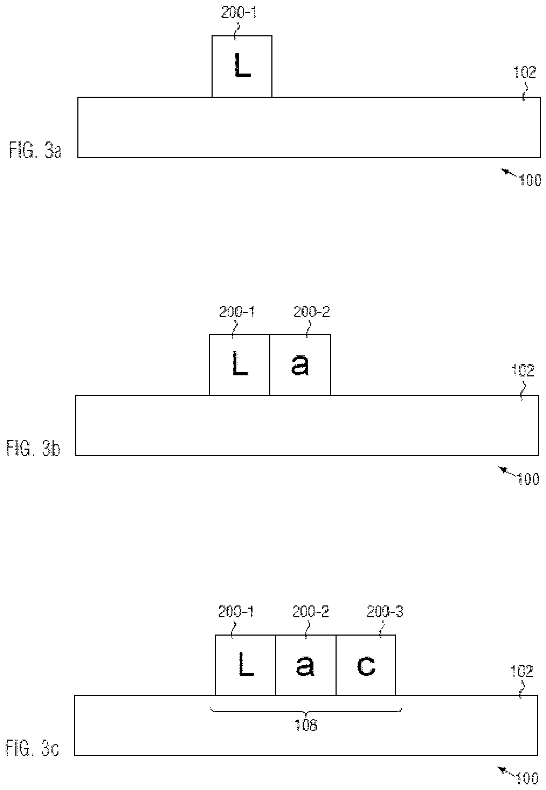

Ainsi les étapes 506 à 510 sont réalisées 1 fois, pour n = 1 et les étapes 512 à 516 sont réalisées N-1 fois pour n objets à identifier dans la séquence de N objets. Le signal sonore correspondant à la combinaison des N objets à identifier formant la séquence d'objets à identifier est oralisé par le moyen acoustique. Par exemple, le son LAC, écrit en phonétique [lak], est oralisé à l'étape 516 lorsque la séquence d'objets à identifier correspond à celle décrite dans les Figures 1a, 1b et 3a-3c.

Lorsque plusieurs séquences d'objets à identifier sont positionnées sur l'élément de support, chaque séquence étant séparée de la suivante par au moins une position libre sur l'élément de support, l'étape 516 oralise alors le signal sonore correspondant à l'ensemble des signaux sonores de chaque séquence d'objets à identifier. Par exemple, si les séquences de lettres correspondent à «LE» et «LAC», le signal sonore final à l'étape 516 sera le son LE, écrit en phonétique [le], suivit du son LAC, écrit en phonétique [lak].

Dans une deuxième réalisation de la méthode selon l'invention, illustré sur la Figure 2b, une étape 518 de vérification d'un second objet avec la séquence d'objets à identifier à placer sur l'élément de support est réalisée avant l'étape 502 de placer un objet à identifier. Toutes les caractéristiques avec les mêmes numéros de référence que sur la Figure 2a ne sont pas décrites à nouveau en détail, mais il est fait référence à leur description ci-dessus.

Cette étape 518 de vérification est réalisée en utilisant un deuxième moyen de support connecté à l'élément de support du dispositif d'apprentissage de lecture. Ce deuxième moyen de support peut être un moyen visuel et/ou acoustique Le deuxième moyen de support permet de montrer et/ou d'oraliser un deuxième objet, faisant partie d'un deuxième ensemble d'objets. Par exemple, le deuxième objet peut illustrer un ensemble de lettres, ordonnées ou désordonnées et/ou un dessin accompagnant et représentant les associations de lettres. Le deuxième moyen de support est mis en marche grâce à un bouton de fonctionnement et est connecté au moyen d'analyse. Le deuxième moyen de support permet de relire et donc de réentendre le son associé aux objets déjà placés sur le dispositif, à volonté, grâce à un bouton de relecture. Le deuxième moyen de support peut permettre une correction autodidacte par l'usager. Si l'usager utilise le deuxième moyen de support dès le début de la méthode, avant l'étape 502, le deuxième objet positionné sur le deuxième moyen de support permet de guider l'usager dans le choix des objets à identifier à poser sur l'élément de support en oralisant le deuxième objet. Lorsque le deuxième objet comprend un ensemble de lettres, le deuxième moyen de support permet soit d'oraliser l'ensemble des lettres ou seulement les lettres une à une. Il restera alors à l'usager à positionner le ou les objets à identifier et à les ordonner correctement pour former la séquence d'objets à identifier comme oralisé et/ou montré par le deuxième objet. Lorsque l'objet à identifier est une lettre, alors la séquence d'objets à identifier correspond à un mot. La méthode selon l'invention permet donc un auto-apprentissage, sans aide extérieure. Dans une variante, cette étape de vérification est aussi possible quand plusieurs séquences d'objets à identifier sont placées sur l'élément de support, donc plusieurs mots. La vérification peut se faire pour chaque mot / séquence et pour l'ensemble des mots car le deuxième objet peut illustrer un ensemble de mots, et/ou un dessin accompagnant et représentant cet ensemble de mots.

Dans une variante, le deuxième objet permet une étape de vérification visuelle seulement, sans faire le son associé à la séquence de lettres du deuxième objet. L'usager voit l'image et/ou les objets à identifier à utiliser, en ordre ou en désordre, il connaît l'image et la séquence d'objets à identifier représentée par cette image, ici le mot qu'elle représente, et essaie d'ordonner les objets à identifier, ici d'écrire, ou encore d'encoder, ce mot sur l'élément de support. Dans une variante, cette étape de vérification visuelle est aussi réalisable pour plusieurs mots à identifier et à placer sur l'élément de support.

Dans une autre variante de l'invention, aussi illustré sur la Figure 2b, une étape 520 de validation visuelle et/ou orale du ou des objets à identifier est réalisée à la fin du procédé, lorsque la N itération est terminée. L'étape 518 de validation visuelle et/ou orale peut aussi être réalisée à l'aide du deuxième moyen de support et du deuxième objet pour comparer les objets à identifier placés sur l'élément de support et le second objet, lorsque les N itérations sont réalisés. Le deuxième moyen de support peut aussi être un écran à encre électrique (e-ink) pour afficher une image, gérée par le système de gestion de fonctionnement. Cet écran permet de faire une détection automatique d'erreur en comparant la séquence d'objets à identifier utilisés par l'usager et la séquence d'objets à identifier attendue, correspondant à l'image affichée par le deuxième moyen de support visuel. Ainsi, l'usager peut vérifier et valider les objets à identifier déjà placés ou à placer sur l'élément de support de manière indépendante, sans avoir besoin d'aide externe, ce qui correspond à une auto-validation/vérification. Dans une variante, cette étape de vérification visuelle et/ou orale réalisée à la fin du procédé est aussi réalisable pour plusieurs mots à identifier et à placer sur l'élément de support.

Un exemple pratique de la méthode d'apprentissage de lecture selon l'invention est maintenant décrit, utilisant le dispositif d'apprentissage de lecture selon l'invention illustré en Figure 1b avec la séquence d'objets à identifier des Figures 1a, 1b, et les étapes sont montrées sur les Figures 3a - 3c.

La séquence d'objets à identifier comprend trois objets à identifier et les objets à identifier sont des cubes comme illustrés sur la Figure 1a. Les trois objets à identifier 200-1 à 200-3 comprennent respectivement les motifs de lettres suivantes: « A », « C » et « L », soit en majuscule, soit en minuscule.

L'usager utilise le deuxième moyen de support visuel et/ou acoustique qui comprend une carte sur laquelle est représenté un lac et les lettres « A », « C » et « L » en désordre, comme illustré sur la Figure 1b.

L'usager utilise seulement le moyen visuel et regarde le lac sur la carte. Il identifie la séquence de cubes à placer comme étant « LAC » grâce à l'image. Il prend le premier cube portant la lettre « L » et le pose sur une position de l'élément de support du dispositif. Grâce au détrompeur femelle du cube, ici une cavité, l'usager positionne correctement le cube sur un détrompeur male sur l'élément de support, ici une protrusion verticale. La protrusion du support et la cavité du cube s'emboitent parfaitement. Le moyen d'identification du cube entre en contact avec le moyen de connexion de la protrusion qui détecte la présence du cube « L » sur l'élément de support et l'identifie comme le cube « L ». Le signal de reconnaissance du moyen de connexion est envoyé au moyen d'analyse. Le moyen d'analyse analyse le signal de reconnaissance du cube et l'identifie à la lettre « L » qu'il porte et associe un signal sonore L, en phonétique [l], à ce cube. Le moyen acoustique oralise le son L, ou [l] noté selon l'alphabet phonétique international.

L'usager prend maintenant le cube portant la lettre « A » et le pose sur la position directement adjacente à la position du cube « L » sur l'élément de support, sur le côté droit, comme illustré sur la Figure 3b. De nouveau, l'usager positionne correctement le cube sur l'élément de support à la protrusion grâce à la présence de la cavité sur le cube. La protrusion de l'élément de support et la cavité du cube s'emboitent parfaitement. Le moyen d'identification du cube « A » entre en contact avec le moyen de connexion de la protrusion de l'élément de support qui détecte la présence du cube « A » sur l'élément de support sur le côté droit du cube « L ». Comme l'état de présence de cube sur l'élément de support a changé due à la présence du deuxième cube sur l'élément de support, les moyens de connexion de l'élément de support détectent la présence du cube « L » et du deuxième cube directement à côté du cube « L », sur le côté droit, et identifient le deuxième cube comme le cube « A ». Les signaux de reconnaissance des moyens de connexion sont envoyés au moyen d'analyse. Le moyen d'analyse analyse les signaux de reconnaissance des cubes et les identifient comme la combinaison de la lettre « L » du premier cube avec la lettre « A » du deuxième cube et associe un signal sonore LA, en phonétique [la], à cette combinaison de deux cubes. Le moyen acoustique oralise le son LA, en phonétique [la], et non pas le son A, en phonétique [a], du deuxième cube seulement et non pas le son L, en phonétique [l], et le son A, en phonétique [a], séparément.

L'usager prend maintenant le cube portant la lettre « C » et le pose sur la protrusion directement adjacente à la position du cube « A », à droite sur l'élément de support, comme illustré sur la Figure 3c. De nouveau, l'usager positionne correctement le cube sur l'élément de support à une protrusion grâce à la présence de la cavité sur le cube. La protrusion de l'élément de support et la cavité du cube s'emboitent parfaitement. Le moyen d'identification du cube « C » entre en contact avec le moyen de connexion de la protrusion de l'élément de support qui détecte la présence du troisième cube sur l'élément de support directement sur le côté droit du cube « A » et du cube « L », et identifie le troisième cube comme le cube « C ». Comme l'état de présence de cube sur l'élément de support a changé due à la présence du troisième cube sur l'élément de support, les moyens de connexion de l'élément de support détectent la présence du cube « L », du cube « A » et du cube « C » directement à côté du cube « A », sur le côté droit. Les signaux de reconnaissance des moyens de connexion sont envoyés au moyen d'analyse. Le moyen d'analyse analyse les signaux de reconnaissance des cubes et les identifient comme la combinaison de la lettre « L » du premier cube avec la lettre « A » du deuxième cube et avec la lettre « C » du troisième cube et associe un signal sonore LAC, en phonétique [lak], à cette combinaison de trois cubes. Le moyen acoustique oralise le son LAC, en phonétique [lak], et non pas le son C, en phonétique [k], du troisième cube seulement, et non pas le son L, ou [l], le son A, ou [a], et le son C, ou [c], séparément. Selon l'alphabet phonétique international, le son de la lettre C est représenté par le symbole [k].

Si par exemple, après avoir positionné le cube « L », l'usager positionne le cube « C » directement à droite du cube « L », le moyen acoustique oralise le son LC, en phonétique [Ik]. Ainsi l'usager sait de lui-même que cela n'est pas correct et peut donc remplacer le cube « C » par le cube « A » pour obtenir le son LA attendu, en phonétique [la]. L'usager peut donc faire preuve d'auto-correction et d'auto-apprentissage, sans qu'une personne externe lui indique son erreur.

Si par exemple, après avoir positionné le cube « L », l'usager positionne le cube « A » à droite du cube « L », mais pas directement à côté du cube « L », mais par exemple, séparé du cube « L » par une position libre sur l'élément de support, le moyen acoustique oralise le son L, en phonétique [l], suivit du son A, en phonétique [a]. Ainsi l'usager sait de lui-même que cela n'est pas correct et peut donc replacer le cube « A » directement à côté du cube « L » pour obtenir le son LA attendu, en phonétique [la]. L'usager peut donc faire preuve d'auto-correction et d'auto-apprentissage, sans qu'une personne externe lui indique son erreur.

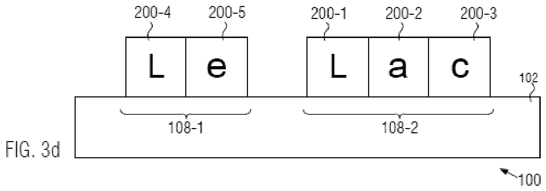

Finalement, sur la Figure 3d, une variante de la Figure 3c est montrée, sur laquelle deux séquences de cubes 108-1 et 108-2 ont été placées sur l'élément de support 102. Dans cette variante, la séquence 108-1 est placée sur l'élément de support 102 et représente le mot, l'article « LE » et la séquence 108-2 est aussi placée sur l'élément de support 102 et correspond à la séquence obtenue à la Figure 3c qui représente le mot « LAC ». La séquence 108-1 est dans ce cas réalisée avant la séquence 108-2 mais elle peut aussi être réalisée après la séquence 108-2.

Pour réaliser la séquence 108-1, l'usager réalise les mêmes étapes décrites pour les Figures 3a à 3c avec les cubes 200-4 et 200-5 formant la séquence 108-1 et correspondant respectivement à la lettre « L » et à la lettre « E ». Le dispositif 100 oralise donc le son LE, en phonétique [le], lorsque la séquence 108-1 est complétée. L'usager laisse maintenant au moins une position libre sur l'élément de support et il exécute de nouveau les étapes décrites dans les Figures 3a à 3c pour écrire le mot « LAC ». Mais maintenant, à chaque étape de la méthode, le dispositif oralise le son associé à la séquence 108-1 en premier et le son associé à la pose d'un nouveau cube de la deuxième séquence 108-2. Ainsi, lorsque l'usager pose le cube 200-1 avec la lettre « L » de la séquence 108-2, le dispositif 100 oralise les sons LE, en phonétique [le], et L, en phonétique [l], le son LE, en phonétique [le], étant le son associé à la séquence 108-1 et le son L étant le son associé au premier cube de la deuxième séquence 108-2. Lorsque l'usager pose le deuxième cube 200-2 de la séquence 108-2 avec la lettre « A » directement à côté du cube 200-1 avec la lettre « L », le dispositif oralise les sons LE, en phonétique [le], et LA, en phonétique [la], le son LE étant le son associé à la séquence 108-1 et le son LA étant le son associé au premier 200-1 et deuxième cube 200-2 de la deuxième séquence 108-2. Finalement, lorsque l'usager pose le troisième cube 200-3 de la deuxième séquence 108-2 avec la lettre « C » directement à côté du cube 200-2 avec la lettre « A », le dispositif 100 oralise les sons LE, en phonétique [l], et LAC, en phonétique [lak], de la première et deuxième séquence.

Si l'usager pose directement le premier cube 200-1 avec la lettre « L » de la deuxième séquence 108-2 directement à côté du cube 200-5 de la première séquence 108-2 sur l'élément de support 102, alors le dispositif 100 oralise le son LEL, en phonétique [l 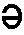 l], comme si le cube 200-1 faisait partie de la première séquence 108-1, donc du mot 108-1. L'usager peut alors se rendre compte de son erreur par lui-même et il peut donc replacer le cube « L » 200-1 de telle manière qu'au moins une position libre existe entre le dernier cube 200-5 de la première séquence 108-1 et le premier cube 200-1 de la deuxième séquence 108-2. L'usager peut donc faire preuve d'auto-correction et d'auto-apprentissage, sans qu'une personne externe lui indique son erreur.

Un certain nombre de modes de réalisation de l'invention ont été décrits. Néanmoins, on comprendra que diverses modifications et améliorations peuvent être apportées sans s'écarter des revendications suivantes.

## Revendications

1. Dispositif d'apprentissage de lecture (100), comprenant:
un ensemble (108) d'objets à identifier (200-N), chaque objet à identifier (200-N) comprenant un moyen d'identification (208);
un élément de support (102) comprenant N positions (110-N), pour permettre un positionnement prédéterminé d'un objet à identifier (200-N) à une position (110-N) sur l'élément de support (102), un moyen d'analyse (104), et un moyen acoustique (106), pour oraliser un signal sonore;
dans lequel
chaque objet à identifier (200-N) est distinct de l'élément de support (102), l'élément de support (102) comprend en outre N moyens de reconnaissance (118-N) configurés pour détecter la présence et/ou l'absence d'un objet à identifier (200-N) positionné à une position et de l'identifier, et
le moyen d'analyse (104) est configuré pour analyser le signal de reconnaissance de l'élément de support (102), le signal de reconnaissance détectant la présence et/ou l'absence d'un objet à identifier (200-N) sur l'élément de support (102), et pour associer un signal sonore à la séquence (108) de n d'objets à identifier (200-N), avec 1≤n≤N positionnés directement l'un à côté de l'autre sur l'élément de support (102) en fonction de l'identité et de la présence et/ou de l'absence des n objets à identifier (200-N), de telle manière que le moyen acoustique (106) oralise le signal sonore obtenu par le moyen d'analyse (104) pour la séquence (108) de n objets à identifier (200-N); dans lequel les N moyens de reconnaissance (118-N) comprennent chacun un moyen de connexion électrique (120-N) pour pouvoir établir un contact électrique avec le moyen d'identification (208) d'un objet à identifier (200-N) quand l'objet à identifier (200-N) est placé sur une des N positions (110-N).

2. Le dispositif d'apprentissage de lecture selon la revendication 1, dans lequel le moyen d'analyse (104) est configuré pour associer un deuxième signal sonore à une deuxième séquence (108) de n' objets à identifier (200-N), avec 1≤n'≤N, séparée de la première séquence (108) de n objets à identifier (200-N) par au moins une position (110-N) libre sur l'élément de support (102), de telle manière que le moyen acoustique (106) oralise de plus le deuxième signal sonore.

3. Le dispositif d'apprentissage de lecture selon une revendication des revendications 1 à 2, dans lequel chaque objet à identifier (200-N) comprend un moyen de positionnement d'accouplement (204) et chacune des N positions (110-N) de l'élément de support (102) comprend un moyen de positionnement d'accouplement (116-N) pour pouvoir réaliser une connexion mécanique par complémentarité de forme.

4. Le dispositif d'apprentissage de lecture selon une des revendications 1 à 3, dans lequel le moyen d'identification (208) de l'objet à identifier (200-N) comprend un circuit électronique passif.

5. Le dispositif d'apprentissage de lecture selon une revendication des revendications 1 à 4, dans lequel chaque objet à identifier (200-N) représente une lettre d'alphabet et le moyen d'analyse (104) est configuré pour oraliser la lettre en fonction de sa prononciation dans la séquence (108).

6. Le dispositif d'apprentissage de lecture selon une revendication des revendications 1 à 5, dans lequel chaque objet à identifier (200-N) comprend plusieurs motifs (206), chaque motif (206) étant différent et chaque motif (206) étant représenté sur une face de l'objet à identifier (200-N).

7. Le dispositif d'apprentissage de lecture selon une revendication des revendication 1 à 6, comprenant en outre un deuxième ensemble d'objets (142) représentant un mot et un deuxième moyen de support (130) pour recevoir un objet (142) du deuxième ensemble d'objets, le moyen d'analyse (104) étant configuré pour comparer le mot d'un objet du deuxième ensemble d'objets (142) placé sur le deuxième moyen de support (130) avec la séquence d'objets à identifier (108) placés sur l'élément de support (102) et configuré pour émettre un signal sonore et/ou visuel en fonction du résultat de la comparaison.

8. Procédé d'apprentissage de lecture en utilisant un dispositif selon une quelconque des revendications 1 à 7, comprenant les étapes de:
a) placer un objet à identifier sur une position libre de la pluralité des N positions de l'élément de support,
b) reconnaitre cet objet à identifier par le moyen de reconnaissance correspondant,
c) analyser le signal de reconnaissance obtenu à l'étape b) pour associer un signal sonore à une séquence d'objets placés de manière directement l'un à côté de l'autre sur l'élément de support, en fonction de l'identité de chaque objet placé sur l'élément de support et sa place dans la séquence, et
d) oraliser le signal sonore associé audits objets à identifier de la séquence de 1 à N objets obtenu lors de l'étape c).

9. Procédé d'apprentissage de lecture selon la revendication 8, dans lequel dans l'étape c) le signal sonore correspond à la prononciation syllabique de la séquence des lettres formée par des objets à identifier placés de manière directement l'un à côté de l'autre sur l'élément de support.

10. Procédé d'apprentissage de lecture selon une revendication des revendications 8 à 9, dans lequel, lorsque plusieurs séquences d'objets sont placées sur l'élément de support, le signal sonore de l'étape c) correspond à l'ensemble des signaux sonores de chaque séquence d'objets placées sur l'élément de support.

11. Procédé d'apprentissage de lecture selon une revendication des revendications 8 à 10 comprenant en outre une étape de vérification pour vérifier si la séquence d'objets à identifier placés directement l'un à côté de l'autre sur l'élément de support correspond à un objet d'un deuxième ensemble d'objets placé sur le deuxième moyen de support.

## Patentansprüche

1. Leselernvorrichtung (100), umfassend: einen Satz (108) von zu identifizierenden Objekten (200-N), wobei jedes zu identifizierende Objekt (200-N) Folgendes umfassend: ein Identifikationsmittel (208);
ein Trägerelement (102), das N Positionen (110-N) umfasst, um ein vorgegebenes Positionieren eines zu identifizierenden Objekts (200-N) in einer Position (110-N) auf dem Trägerelement (102) zu ermöglichen, eine Analyseeinrichtung (104) und eine Akustikeinrichtung (106), um ein akustisches Signal zu versprachlichen;
wobei
jedes zu identifizierende Objekt (200-N) vom Trägerelement (102) getrennt ist, das Trägerelement (102) ferner N Erkennungsmittel (118-N) umfasst, die dazu konfiguriert sind, das Vorhandensein und/oder die Abwesenheit eines in einer Position positionierten zu identifizierenden Objekts (200-N) zu erkennen und es zu identifizieren, und
die Analyseeinrichtung (104) dazu konfiguriert ist, das Erkennungssignal des Trägerelements (102), wobei das Erkennungssignal das Vorhandensein und/oder die Abwesenheit eines zu identifizierenden Objekts (200-N) auf dem Trägerelement (102) erkennt, zu analysieren und der Abfolge (108) von n zu identifizierenden Objekten (200-N), wobei 1≤n≤N, die unmittelbar nebeneinander auf dem Trägerelement (102) positioniert sind, entsprechend der Identität sowie dem Vorhandensein und/oder der Abwesenheit der n zu identifizierenden Objekte (200-N) ein akustisches Signal derart zuzuordnen, dass die Akustikeinrichtung (106) das von der Analyseeinrichtung (104) für die Abfolge (108) von n zu identifizierenden Objekten (200-N) erhaltene akustische Signal versprachlicht; wobei die N Erkennungsmittel (118-N) jeweils ein elektrisches Verbindungsmittel (120-N) umfassen, um einen elektrischen Kontakt mit dem Identifikationsmittel (208) eines zu identifizierenden Objekts (200-N) herstellen zu können, wenn das zu identifizierende Objekt (200-N) in einer der N Positionen (110-N) platziert ist.

2. Leselernvorrichtung nach Anspruch 1, wobei die Analyseeinrichtung (104) dazu konfiguriert ist, einer zweiten Abfolge (108) von n' zu identifizierenden Objekten (200-N), wobei 1≤n'≤N, die von der ersten Abfolge (108) von n zu identifizierenden Objekten (200-N) durch mindestens eine freie Position (110-N) auf dem Trägerelement (102) getrennt ist, ein zweites akustisches Signal derart zuzuordnen, dass die Akustikeinrichtung (106) ferner das zweite akustische Signal versprachlicht.

3. Leselernvorrichtung nach einem der Ansprüche 1 bis 2, wobei jedes zu identifizierende Objekt (200-N) ein Kopplungspositionierungsmittel (204) aufweist und jede der N Positionen (110-N) des Trägerelements (102) ein Kopplungspositionierungsmittel (116-N) aufweist, um eine mechanische Verbindung durch Formkomplementarität herstellen zu können.

4. Leselernvorrichtung nach einem der Ansprüche 1 bis 3, wobei das Identifikationsmittel (208) des zu identifizierenden Objekts (200-N) eine passive elektronische Schaltung umfasst.

5. Leselernvorrichtung nach einem der Ansprüche 1 bis 4, wobei jedes zu identifizierende Objekt (200-N) einen Buchstaben des Alphabets repräsentiert und die Analyseeinrichtung (104) dazu konfiguriert ist, den Buchstaben entsprechend seiner Aussprache in der Abfolge (108) zu versprachlichen.

6. Leselernvorrichtung nach einem der Ansprüche 1 bis 5, wobei jedes zu identifizierende Objekt (200-N) mehrere Muster (206) umfasst, wobei jedes Muster (206) unterschiedlich ist und jedes Muster (206) auf einer Seite des zu identifizierenden Objekts (200-N) dargestellt ist.

7. Leselernvorrichtung nach einem der Ansprüche 1 bis 6, die ferner einen zweiten Satz von Objekten (142), die ein Wort repräsentieren, und ein zweites Trägermittel (130) zum Aufnehmen eines Objekts (142) des zweiten Satzes von Objekten umfasst, wobei die Analyseeinrichtung (104) dazu konfiguriert ist, das Wort eines auf dem zweiten Trägermittel (130) platzierten Objekts des zweiten Satzes von Objekten (142) mit der auf dem Trägerelement (102) platzierten Abfolge von zu identifizierenden Objekten (108) zu vergleichen und dazu konfiguriert ist, in Abhängigkeit vom Ergebnis des Vergleichs ein akustisches und/oder visuelles Signal auszugeben.

8. Leselernverfahren unter Verwendung einer Vorrichtung nach einem der Ansprüche 1 bis 7, das die folgenden Schritte umfasst:
a) Platzieren eines zu identifizierenden Objekts in einer freien Position der Vielzahl von N Positionen des Trägerelements,
b) Erkennen dieses zu identifizierenden Objekts durch die entsprechenden Erkennungsmittel,
c) Analysieren des in Schritt b) erhaltenen Erkennungssignals, um einer Abfolge von direkt nebeneinander auf dem Trägerelement platzierten Objekten entsprechend der Identität jedes auf dem Trägerelement platzierten Objekts und seiner Position in der Abfolge ein akustisches Signal zuzuordnen, und
d) Versprachlichen des akustischen Signals, das den zu identifizierenden Objekten aus der in Schritt c) erhaltenen Abfolge von 1 bis N Objekten zugeordnet ist.

9. Leselernverfahren nach Anspruch 8, wobei in Schritt c) das akustische Signal der Silbenaussprache der Abfolge von Buchstaben entspricht, die durch die auf dem Trägerelement direkt nebeneinander platzierten zu identifizierenden Objekte gebildet wird.

10. Leselernverfahren nach einem der Ansprüche 8 bis 9, wobei, wenn mehrerer Abfolgen von Objekten auf dem Trägerelement platziert sind, das akustische Signal aus Schritt c) dem Satz von akustischen Signalen jeder auf dem Trägerelement platzierten Abfolge von Objekten entspricht.

11. Leselernverfahren nach einem der Ansprüche 8 bis 10, das ferner einen Überprüfungsschritt umfasst, um zu überprüfen, ob die Abfolge von zu identifizierenden Objekten, die direkt nebeneinander auf dem Trägerelement platziert sind, einem Objekt eines zweiten Satzes von Objekten entspricht, der auf dem zweiten Trägerelement platziert ist.

## Claims

1. A device for learning to read (100), comprising: a set (108) of objects to be identified (200-N), each object to be identified (200-N) comprising an identification means (208);
a support element (102) comprising N positions (110-N), for enabling predetermined positioning of an object to be identified (200-N) at a position (110-N) on the support element (102), analysis means (104), and acoustic means (106), for uttering an audible signal;
wherein
each object to be identified (200-N) is distinct from the support element (102), the support element (102) further comprises N recognition means (118-N) configured to detect the presence and/or absence of an object to be identified (200-N) positioned at a position and to identify it, and
the analysis means (104) is configured to analyze the recognition signal of the support element (102), the recognition signal detecting the presence and/or absence of an object to be identified (200-N) on the support element (102), and to associate an audible signal with the sequence (108) of n objects to be identified (200-N), where 1≤n≤N, that are positioned directly next to each other on the support element (102) as a function of the identity and of the presence and/or absence of the n objects to be identified (200-N), such that the acoustic means (106) utters the audible signal obtained by the analysis means (104) for the sequence (108) of n objects to be identified (200-N); wherein the N recognition means (118-N) each comprise electrical connection means (120-N) for establishing electrical contact with the means (208) for identifying an object to be identified (200-N) when the object to be identified (200-N) is placed on one of the N positions (110-N).

2. The device for learning to read according to claim 1, wherein the analysis means (104) is configured to associate a second audible signal with a second sequence (108) of n' objects to be identified (200-N), where 1≤n'≤N, that is separated from the first sequence (108) of n objects to be identified (200-N) by at least one free position (110-N) on the support element (102), so that the acoustic means (106) additionally utters the second audible signal.

3. The device for learning to read according to one of claims 1 to 2, wherein each object to be identified (200-N) comprises a coupling positioning means (204) and each of the N positions (110-N) of the support element (102) comprises a coupling positioning means (116-N) to allow a form-fitting mechanical connection to be made.

4. The device for learning to read according to one of claims 1 to 3, wherein the means (208) for identifying the object to be identified (200-N) comprises a passive electronic circuit.

5. The device for learning to read according to one of claims 1 to 4, wherein each object to be identified (200-N) represents a letter of an alphabet and the analysis means (104) is configured to utter the letter according to its pronunciation in the sequence (108).

6. The device for learning to read according to one of claims 1 to 5, wherein each object to be identified (200-N) comprises a plurality of patterns (206), each pattern (206) being different and each pattern (206) being represented on one face of the object to be identified (200-N).

7. The device for learning to read according to one of claims 1 to 6, further comprising a second set of objects (142) representing a word and a second support means (130) for receiving an object (142) of the second set of objects, the analysis means (104) being configured to compare the word of an object of the second set of objects (142) placed on the second support means (130) with the sequence of objects to be identified (108) placed on the support element (102) and configured to emit an audible and/or visual signal depending on the result of the comparison.

8. A method for learning to read using a device according to any one of claims 1 to 7, comprising the steps of:
a) placing an object to be identified on a free position of the plurality of N positions of the support element,
b) recognizing this object to be identified, by the corresponding recognition means,
c) analyzing the recognition signal obtained in step b) to associate an audible signal with a sequence of objects placed directly next to each other on the support element, depending on the identity of each object placed on the support element and its place in the sequence, and
d) uttering the audible signal associated with said objects to be identified from the sequence of 1 to N objects obtained in step c).

9. The method for learning to read according to claim 8, wherein in step c) the audible signal corresponds to the syllabic pronunciation of the sequence of letters formed by objects to be identified placed directly next to one another on the support element.

10. The method for learning to read according to one of claims 8 to 9, wherein, when several object sequences are placed on the support element, the audible signal of step c) corresponds to all the audible signals of each sequence of objects placed on the support element.

11. The method for learning to read according to one of claims 8 to 10 further comprising a verification step to check whether the sequence of objects to be identified placed directly next to each other on the support element corresponds to an object of a second set of objects placed on the second support means.
